(19)

Europäisches
Patentamt
European
Patent Office
Office européen
des brevets

(11)  EP 4 765 297 A1

(12)  **EUROPEAN PATENT APPLICATION**

(43) Date of publication:
24.06.2026  Bulletin 2026/26

(21) Application number: 25222453.0

(22) Date of filing: 11.12.2025

(51) International Patent Classification (IPC):
*H01M 10/0583* (2010.01)    *H01M 10/0585* (2010.01)
*H01M 10/04* (2006.01)

(52) Cooperative Patent Classification (CPC):
H01M 10/0404; H01M 10/0583; H01M 10/0585

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024  IT 202400029346

(71) Applicant: G.D S.p.A.
40133 Bologna (BO) (IT)

(72) Inventors:
• FORTINI, Massimo
I-40133 Bologna (BO) (IT)
• NOFERINI, Giacomo
I-40133 Bologna (BO) (IT)
• PETTINARI, Fabrizio
I-40133 Bologna (BO) (IT)

(74) Representative: Porta & Consulenti Associati
S.p.A.
Via Winckelmann, 1
20146 Milano (IT)

(54)  **APPARATUS AND METHOD FOR IDENTIFYING THE POSITION OF ELECTROCHEMICAL CELL ELEMENTS IN A STACKING PLANE OF A STACKING DEVICE IN AN ELECTROCHEMICAL CELL MANUFACTURING MACHINE**

(57)  An apparatus (27) for identifying the position of electrochemical cell elements in a stacking plane comprises a measurement device (34) configured to take measurement data representative of the distance between a first vertex (V1) and a second vertex (F1) of an electrochemical cell element (100) to be deposited on a stacking plane (25); a detection device (28) placed in a display relationship with control areas (29) defined at a stacking plane (25), wherein the detection device (28) is configured to detect a plurality of display data of said electrochemical cell element (100) in said control areas (29); a processing unit (33) operatively associated with said measurement device (34) and said detection device (28). The control unit (33) is configured to: obtain said measurement data; on the basis of the measurement data obtained, calculate a first distance (D1) between the first vertex (V1) of the electrochemical cell element (100) and the second vertex (F1) of the electrochemical cell element (100); obtain the plurality of display data; on the basis of the plurality of display data obtained, determine a first position identifying a position of the first vertex (V1) of the electrochemical cell element (100); on the basis of the calculation of the first distance (D1) and on the basis of the determination of the first position, determine a second position identifying a position of the second vertex (F1) of the electrochemical cell element (100).

Fig 8

EP 4 765 297 A1

## Description

The present invention refers to an apparatus for identifying the position of electrochemical cell elements in a stacking plane of a stacking device in an electrochemical cell manufacturing machine and to a method for identifying the position of electrochemical cell elements in a stacking plane of a stacking device in an electrochemical cell manufacturing machine.

An electrochemical cell is a device capable of converting chemical energy into electrical energy (and/or vice versa), such as galvanic cells, both primary and secondary, fuel cells or electrolytic cells.

The present invention finds a preferred, although not exclusive, application in the sector of the manufacture of electric accumulators, for the production of which a stacking device is used which stacks electrochemical cell elements on each other.

In the industrial sector of the production of electric accumulators, electrochemical cells are produced made from electrochemical cell elements stacked between them on top of each other, possibly with a separation layer in dielectric material interposed, generally indicated in the technical jargon of the sector with the term "separator".

The electrochemical cell elements may be semi-finished products comprising alternating layers of separator, cathode electrode and anode electrode, wherein the cathode electrode and anode electrode are provided in the form of generally rectangular plates or sheets cut from continuous strips of material. Alternatively, the electrochemical cell elements may be cathode electrodes, anode electrodes and one or more separator strips, wherein the cathode electrodes and the anode electrodes are provided in the form of generally rectangular plates or sheets cut from continuous strips of material. In the latter case, the separator may be a continuous strip arranged in a serpentine pattern between each anode electrode and each cathode electrode or may be provided in the form of sheets which are interposed between each anode electrode and each cathode electrode. The cathode electrodes and the anode electrodes are substantially made by depositing a layer of electrode active material on one surface or both surfaces of a strip consisting of a current collector metal foil. By choosing an appropriate combination of electrode active material and strip material, electrodes which are intended to make positive electrodes and electrodes intended to make negative electrodes can be obtained.

In the production of electric accumulators of this type, the layers of electrochemical cell elements are stacked together by means of a stacking device which alternately picks up the electrochemical cell elements among them and places them stacked together on a stacking plane.

In the Applicant's experience, when a first electrochemical cell element is deposited on the stacking plane, or on an electrochemical cell element already deposited on the stacking plane, the first electrochemical cell element (e.g. a cathode electrode) is held in place by first grippers that retain it on the stacking plane. Above the first deposited electrochemical cell element the dielectric separator (in sheet or continuous strip form) is laid. When a second electrochemical cell element (for example an anode element) is deposited on the dielectric separator, the second electrochemical cell element rests at two vertices on the first grippers (which retain the first electrochemical cell element) and is retained by second grippers. Upon subsequent deposition of a third electrochemical cell element (e.g. a cathode electrode), the first grippers release the first electrochemical cell element and grasp the third gripper element retaining it in the stack being formed. The third gripping element rests on the second grippers that are retaining the second electrochemical cell element on the stacking plane.

The Applicant has verified that it is very important to check the deposition accuracy of the various electrochemical cell elements in order to comply with high manufacture standards. In fact, the vertices of each layer of electrochemical cell element must have a predefined position within the stack being formed, on the one hand to guarantee the most optimal electrochemical performance of the electrochemical cell and, on the other, to avoid a short circuit between the layers of electrochemical cell elements.

The Applicant has observed that this check should be carried out for each deposited electrochemical cell element and before a further electrochemical cell element is deposited, in such a way as to be able to intervene promptly in the event that the deposition accuracy is not adequate.

However, the Applicant has verified that, at the time of deposition of each electrochemical cell element, two vertices of the cell element are raised with respect to the position they will assume in the stack being formed as they rest on the grippers that retain the underlying electrochemical cell element. Therefore, the exact position of the raised vertices with respect to the stacking plane and with respect to the electrochemical cell elements already deposited is not directly determinable.

The Applicant has perceived that the exact position of the raised vertices with respect to the stacking plane and with respect to the electrochemical cell elements already deposited could be obtained through a reconstruction of the position of these raised vertices based on geometric considerations deriving from the fact that the electrochemical cell element is obtained by cutting a continuous strip.

The Applicant has in fact noted that said continuous strip has two sides or edges substantially parallel to each other and that the electrochemical cell element is delimited by said two sides or edges substantially parallel to each other and by two cutting lines each of which is straight in such a way that the electrochemical cell element has a quadrangular and preferably generally rectangular shape.

The Applicant has therefore found that by measuring the distance between two vertices of the electrochemical cell element before depositing it on the stacking plane and determining the position of the not-raised vertex of the electrochemical cell element once positioned on the stacking plane, the position of the raised vertex and thus of the electrochemical cell element would be determinable by adding the measured distance to the determined position of the not-raised vertex.

The present invention therefore refers, in a first aspect thereof, to an apparatus for identifying the position of electrochemical cell elements in a stacking plane of a stacking device in an electrochemical cell manufacturing machine.

Preferably, the apparatus comprises a measurement device configured to take measurement data representative of the distance between a first vertex and a second vertex of an electrochemical cell element to be deposited on a stacking plane.

Preferably, the apparatus comprises a detection device placed in a display relationship with control areas defined at a stacking plane.

Preferably, the detection device is configured to detect a plurality of display data of said electrochemical cell element in said control areas.

Preferably, the apparatus comprises a processing unit operatively associated with said measurement device and said detection device.

Preferably, the processing unit is configured to obtain said measurement data.

Preferably, the processing unit is configured to, on the basis of said measurement data obtained, calculate a first distance between the first vertex of the electrochemical cell element and the second vertex of the electrochemical cell element.

Preferably, the processing unit is configured to obtain said plurality of display data.

Preferably, the processing unit is configured to, on the basis of said plurality of display data obtained, determine a first position identifying a position of the first vertex of the electrochemical cell element.

Preferably, the processing unit is configured to, on the basis of the calculation of the first distance and on the basis of the determination of the first position, determine a second position identifying a position of the second vertex of the electrochemical cell element.

Preferably, the processing unit is configured to compare said first position and said second position with a predetermined first reference position and with a predetermined second reference position representative of design positions that the first vertex and the second vertex of the electrochemical cell element must assume within the stack of electrochemical cell elements.

The Applicant considers that in this way it is possible to determine the position of the first vertex of the electrochemical cell element by means of a direct or indirect view when the electrochemical cell element has been deposited on the stacking plane and to determine the position of the second vertex on the basis of measurements taken before the electrochemical cell element is deposited on the stacking plane. The position of the first vertex and the second vertex define the position of the electrochemical cell element on the stacking plane. The choice of the exact position of the control areas can be made based on the actual stacking process, depending on the type of electrochemical cell element used and depending on the portions of said electrochemical cell element that are directly visible when the electrochemical cell element is deposited on the stacking plane.

The present invention refers, in a second aspect thereof, to a stacking device of an electrochemical cell manufacturing machine.

Preferably, the device comprises a stacking plane for electrochemical cell elements.

Preferably, the device comprises a conveyor for feeding electrochemical cell elements towards the stacking plane.

Preferably, the device comprises grippers to grasp an electrochemical cell element deposited on the stacking plane.

Preferably, the grippers comprise first grippers and second grippers.

Preferably, the device comprises an apparatus for identifying the position of electrochemical cell elements in accordance with the first aspect of the invention.

Preferably, said measurement device is placed at said conveyor and said detection device is placed at said stacking plane.

The present invention refers, in a third aspect thereof, to an electrochemical cell manufacturing machine.

Preferably, the machine comprises a forming station of electrochemical cell elements.

Preferably, the machine comprises a stacking device in accordance with the second aspect of the invention.

The present invention refers, in a fourth aspect thereof, to a method for identifying the position of electrochemical cell elements in a stacking plane of a stacking device in an electrochemical cell manufacturing machine.

Preferably, it is provided for determining a first distance between a first vertex of an electrochemical cell element and a second vertex of the electrochemical cell element.

Preferably, it is provided for detecting a plurality of display data of said electrochemical cell element in control areas located at a stacking plane. Preferably, it is provided, on the basis of said plurality of display data, for calculating a first position of the first vertex of the electrochemical cell element on the stacking plane.

Preferably, it is provided, on the basis of the first calculated position and the first distance, for determining a second position of the second vertex of the electrochemical cell element on the stacking plane.

Preferably, it is provided, on the basis of the calculation of the first position of the first vertex of the electrochemical cell element on the stacking plane and on the basis of the determination of the second position of the second vertex of the electrochemical cell element on the stacking plane, for comparing said first position and said second position with a first reference position and with a second reference position representative of design positions that the first vertex and the second vertex of the electrochemical cell element must assume within the stacking of electrochemical cell elements.

The present invention refers, in a fifth aspect thereof, to a method for manufacturing electrochemical cells.

Preferably, it is provided for feeding electrochemical cell elements to an stacking plane.

Preferably, it is provided for placing an electrochemical cell element on the stacking plane and retaining said electrochemical cell element on said stacking plane with grippers.

Preferably, it is provided for identifying the position of the electrochemical cell element on the stacking plane by implementing a method in accordance with the fourth aspect of the present invention.

The expression "electrochemical cell element" means both a semi-finished product obtained by coupling alternating layers of separator, cathode electrode and anode electrode, in which the cathode electrode and the anode electrode are provided in the form of generally rectangular plates or sheets cut from continuous strips of material, and individual cathode electrodes and anode electrodes in the form of generally rectangular plates or sheets cut from continuous strips of material.

The term "contrast", when referred to an image, means the ratio or difference between brightness values in the image. A contrast transition is the ratio or difference between different brightness values between adjacent points or zones in the image.

The present invention may have at least one of the preferred features described below. Such features may therefore be present individually or in combination with each other, unless expressly stated otherwise, in any aspect of the present invention.

Preferably, the electrochemical cell element comprises four edges each of which delimits an end of the electrochemical cell. Preferably, each pair of edges of the electrochemical cell meet at a corresponding vertex of the electrochemical cell.

Preferably, a first edge of the electrochemical cell element meets a second edge of the electrochemical cell element at a first vertex. Preferably, a third edge of the electrochemical cell element meets the second edge of the electrochemical cell element at a third vertex. Preferably, a fourth edge of the electrochemical cell element meets the first edge of the electrochemical cell element at a second vertex. Preferably, the fourth edge of the electrochemical cell element meets the third edge of the electrochemical cell element at a fourth vertex.

Preferably, the first edge is substantially parallel to the third edge.

Preferably, the second edge is substantially parallel to the fourth edge.

Preferably, a plurality of electrochemical cell elements are deposited on each other on the stacking plane in such a way as to realize a stack of electrochemical cell elements.

Preferably, each electrochemical cell element is deposited on the stacking plane in an expected position. This expected position is defined by the position that the electrochemical cell element should actually occupy, on the basis of a design operation of the machine, on the stacking plane.

Preferably, each electrochemical cell element is deposited on the stacking plane as it is picked up and released by a pick-up device.

Preferably, the pick-up device is configured to pick up an electrochemical cell element and to release it onto the stacking plane.

Preferably, the pick-up device is configured to pick up an electrochemical cell element from a pick-up support.

Preferably, the pick-up support is part of the conveyor for feeding electrochemical cell elements towards the stacking plane.

Preferably, the conveyor comprises a transport plane on which an electrochemical cell element lies.

Preferably, each electrochemical cell element that is transported by said conveyor lies on a transport plane.

Preferably, the measurement device is placed in a display relationship with an electrochemical cell element when placed on the conveyor.

Preferably, the measurement device and the processing unit are configured to determine said first distance between the first vertex and the second vertex when the electrochemical cell element is placed on the conveyor.

Preferably, the measurement device is placed in elevation on the transport plane of the conveyor.

Preferably, said measurement device is placed in a display relationship with measurement areas to detect a plurality of measurement data of said electrochemical cell element in said measurement areas.

Preferably, said measurement areas comprise a plurality of measurement areas defined at positions of portions of the edges of the electrochemical cell element on the conveyor.

Preferably, respective portions of the electrochemical cell element comprising an edge portion and part of the environment surrounding the electrochemical cell element are placed in the measurement areas.

Preferably, each measurement area has a first dimension in a direction substantially parallel to a respective edge and a second dimension in a direction perpendicular to said edge of the electrochemical cell element. Preferably, the first dimension is less than one quarter of the length of the respective edge and greater than one twentieth of the length of the respective edge. Preferably the second dimension is less than the first dimension.

Preferably, the measurement device comprises at least one optical measurement detector configured to acquire images.

Preferably, said at least one optical detector is configured to frame the measurement areas.

Preferably, it is provided for detecting a plurality of measurement data in each measurement area and sending them to the processing unit.

Preferably, detecting a plurality of measurement data of each measurement area comprises acquiring images of said measurement area.

Preferably, said plurality of measurement data is represented by a plurality of contrast transition zones in an image acquired in a measurement area.

Preferably, said at least one optical detector is configured to detect contrast transition zones within the measurement areas.

The Applicant has noted that the electrochemical cell element, when captured in an image, exhibits a different brightness than the brightness of the environment surrounding the electrochemical cell element. Such different brightness between the electrochemical cell element and the surrounding environment generates a contrast transition in a transition zone between an edge of the electrochemical cell element and the surrounding environment. Depending on the resolution, in terms of pixels per square inch (PPI), of the image, this transition zone may affect more or less pixels of the image.

Preferably, acquiring an image in a measurement area comprises acquiring a plurality of minimum units of the image. Such minimum image units are preferably pixels. Preferably, such pixels are organised according to a grid matrix.

Preferably, it is provided for defining a Cartesian measurement plane, wherein each pair of coordinates is associated with a point in the Cartesian measurement plane.

Preferably, said Cartesian measurement plane is associable with the transport plane of the conveyor.

Preferably, each pixel is uniquely associated with a pair of coordinates in said Cartesian measurement plane.

Preferably, each contrast transition zone of the image in a measurement area is defined by a pixel in which a predetermined difference in brightness with respect to adjacent pixels is identified.

Preferably, on the basis of each contrast transition zone of the image of the measurement areas, the processing unit is configured to determine the first distance between the first vertex and the second vertex of the electrochemical cell element.

Preferably, said processing unit is configured to compare said plurality of measurement data with a calibration matrix to determine said first distance between said first vertex and said second vertex.

Preferably, said measurement device is placed in an observational relationship with said calibration matrix to acquire said calibration matrix and transmit it to said processing unit.

Preferably, said calibration matrix comprises a plurality of reference points associated with said Cartesian measurement plane wherein the distance between said reference points is known and predetermined.

Preferably, a pair of Cartesian coordinates in said Cartesian measurement plane is associated with each reference point.

Preferably, said processing unit is configured to determine an initial position of the first vertex of the electrochemical cell element according to a pair of Cartesian coordinates in said Cartesian measurement plane.

Preferably, said processing unit is configured to determine an initial position of the second vertex of the electrochemical cell element according to a pair of Cartesian coordinates in the Cartesian measurement plane.

The initial position of the first vertex of the electrochemical cell element is identified on the conveyor.

The initial position of the initial first vertex of the electrochemical cell element is identified on the conveyor.

Preferably, said processing unit is configured to determine said first distance between said first vertex and said second vertex as a distance between Cartesian coordinates of the initial position of the first vertex and Cartesian coordinates of the initial position of the second vertex in said Cartesian measurement plane. Preferably, said processing unit is configured to determine a first measurement line on the basis of a first plurality of measurement data in a first measurement area and to determine a second measurement line on the basis of a second plurality of measurement data in a second measurement area.

Preferably, said processing unit is configured, on the basis of the determination of the first measurement line and the second measurement line, to calculate the point of intersection of the first measurement line with the second measurement line. This point of intersection uniquely identifies the initial position of the first vertex on the transport plane. Preferably, the position of the first vertex on the transport plane is expressed with a pair of Cartesian coordinates in the Cartesian measurement plane.

Preferably, said processing unit is configured to determine a third measurement line on the basis of a third plurality of measurement data in a third measurement area and to determine a fourth measurement line on the basis of a fourth plurality of measurement data in a fourth measurement area.

Preferably, said processing unit is configured, on the basis of the determination of the third measurement line and the fourth measurement line, to calculate the point of intersection of the third measurement line with the fourth measurement line. This point of intersection uniquely identifies the initial position of the second vertex on the transport plane. Preferably, the initial position of the second vertex on the transport plane is expressed with a pair of Cartesian coordinates in the Cartesian measurement plane.

The first measurement line is representative of the first edge of the electrochemical cell element.

The second measurement line is representative of the second edge of the electrochemical cell element.

The third measurement line is further representative of the first edge of the electrochemical cell element.

The fourth measurement line is representative of the fourth edge of the electrochemical cell element.

Preferably, each measurement line is a straight line describing the respective plurality of measurement data on the basis of a statistical model.

Preferably, determining a measurement line representative of a respective edge of the electrochemical cell element on the basis of the respective plurality of measurement data comprises applying a statistical model to a plurality of contrast transition zones of the image in a respective measurement area.

Preferably, applying a statistical model comprises identifying a plurality of contrast transition zones and placing each contrast transition zone in a unique relationship with a pair of coordinates of said Cartesian measurement plane.

Preferably, said statistical model identifies further pairs of coordinates in said Cartesian measurement plane, different from the pairs of coordinates placed in a unique relationship with respective contrast transition zones.

Preferably, said statistical model defines a first-degree linear equation associated with each straight line describing the respective plurality of measurement data.

Said statistical model is for example a linear regression.

Preferably, the detection device is placed in a display relationship with an electrochemical cell element when placed on the stacking plane.

Preferably, the detection device and the processing unit are configured to determine said position of the first vertex of the electrochemical cell element when the electrochemical cell element is placed on the stacking plane.

Preferably, the detection device is placed in elevation on the stacking plane.

Preferably, said control areas on which the detection device detects the plurality of display data comprise a first control area.

Preferably, said detection device is configured to detect a first plurality of display data in said first control area.

Preferably, the first control area has a first dimension in a direction substantially parallel to the first edge and a second dimension in a direction perpendicular to the first edge of the electrochemical cell element. Preferably, the first dimension is less than one quarter of the length of the first edge and greater than one twentieth of the length of the first edge. Preferably the second dimension is less than the first dimension.

The first control area is defined at the expected position of the first edge of the electrochemical cell element on the stacking plane.

The first control area is defined at the expected position of a portion of the first edge of the electrochemical cell element.

Preferably, the first control area is defined at the first edge in a position closer to the first vertex than to the second vertex.

Preferably, a portion of the electrochemical cell element, which comprises a portion of the first edge, and part of the environment surrounding the electrochemical cell element is placed in the first control area.

Preferably, the detection device comprises at least one optical detector configured to acquire images.

Preferably, said at least one optical detector is placed in elevation with respect to the stacking plane.

Preferably, said at least one optical detector is placed in elevation with respect to the electrochemical cell element.

Preferably, said at least one optical detector is configured to frame the first control area.

Preferably, said processing unit is configured, on the basis of said first plurality of display data, to determine a first line representative of the first edge of the electrochemical cell element.

Preferably, detecting a first plurality of display data comprises acquiring an image of the first control area.

Preferably, said first plurality of display data is represented by a plurality of contrast transition zones in an image acquired in said first control area.

Preferably, said at least one optical detector is configured to detect contrast transition zones within the first control area.

The Applicant has found that by detecting such transition zones within the first control area it is possible to mathematically determine the first line representative of the first edge of the electrochemical cell element.

Preferably, acquiring an image of the first control area comprises acquiring a plurality of minimum units of the image. Such minimum image units are preferably pixels. Preferably, such pixels are organised according to a grid matrix.

Preferably, it is provided for defining a Cartesian survey plane, wherein each pair of coordinates is associated with a point in the Cartesian survey plane.

Preferably, said Cartesian survey plane is associable with the stacking plane.

Preferably, each pixel is uniquely associated with a pair of coordinates in said Cartesian survey plane.

Preferably, each contrast transition zone of the image in said first control area is defined by a pixel in which a predetermined difference in brightness with respect to adjacent pixels is identified.

Preferably, said first line is a straight line describing the first plurality of display data on the basis of a statistical model.

Preferably, determining a first line representative of the first edge of the electrochemical cell element on the basis of said first plurality of display data comprises applying a statistical model to a plurality of contrast transition zones of the image in said first control area.

Preferably, applying a statistical model comprises identifying a plurality of contrast transition zones and placing each contrast transition zone in a unique relationship with a pair of coordinates of said Cartesian survey plane.

Preferably, said statistical model identifies further pairs of coordinates in said Cartesian survey plane, different from the pairs of coordinates placed in a unique relationship with respective contrast transition zones.

Preferably, said statistical model defines a first-degree linear equation associated with said first line describing the first plurality of display data.

Said statistical model is for example a linear regression.

Preferably, said processing unit is configured to determine said second position of the second vertex on the basis of the determination of said first line, on the basis of the determination of said first position of the first vertex and on the basis of said first distance.

Preferably, said processing unit is configured to determine said first position according to a first Cartesian coordinate and according to a further first Cartesian coordinate in said Cartesian survey plane.

Preferably, said processing unit is configured to determine said second position according to a second Cartesian coordinate and according to a further second Cartesian coordinate in said Cartesian survey plane.

Preferably, said second position is determined by said processing unit by adding, along said first line, said first distance to Cartesian coordinates representing the position of the first vertex on the Cartesian survey plane.

To determine the first position of the first vertex it is preferably provided to detect a second plurality of display data in a second control area located on the stacking plane.

For this purpose, the detection device is preferably placed in a display relationship with a second control area defined at the stacking plane and configured to detect a second plurality of display data in said second control area.

The processing unit is preferably configured to obtain said second plurality of display data.

The processing unit is preferably configured, on the basis of said second plurality of display data obtained, to determine a second line representative of the second edge of the electrochemical cell element.

The processing unit is preferably configured, on the basis of the determination of the first line and the second line, to calculate the point of intersection of the first line with the second line.

This point of intersection uniquely identifies the first position of the first vertex.

Preferably, the second control area has a first dimension in a direction substantially parallel to the second edge and a second dimension in a direction perpendicular to the second edge of the electrochemical cell element. Preferably, the first dimension is less than one quarter of the length of the second edge and greater than one twentieth of the length of the second edge. Preferably the second dimension is less than the first dimension.

Preferably, detecting a second plurality of display data comprises acquiring an image of the second control area.

Preferably, said second plurality of display data is represented by a plurality of contrast transition zones in an image acquired in said second control area.

Preferably, said at least one optical detector is configured to detect contrast transition zones within the second control area.

Preferably, acquiring an image of the second control area comprises acquiring a plurality of minimum units of the image. Such minimum image units are preferably pixels. Preferably, such pixels are organised according to a grid matrix.

Preferably, a pair of coordinates in the Cartesian survey plane is uniquely associated with each pixel.

Preferably, each contrast transition zone of the image in said first control area is defined by a pixel in which a predetermined difference in brightness with respect to adjacent pixels is identified.

Preferably, said second line is a straight line describing the second plurality of display data on the basis of a statistical model.

Preferably, determining a second line representative of the second edge of the electrochemical cell element on the basis of said second plurality of display data comprises applying a statistical model to a plurality of contrast transition zones of the image in said second control area.

Preferably, applying a statistical model comprises identifying a plurality of contrast transition zones and placing each contrast transition zone in a unique relationship with a pair of coordinates of the Cartesian survey plane.

Preferably, said statistical model identifies further pairs of coordinates in said Cartesian survey plane, different from the pairs of coordinates placed in a unique relationship with respective contrast transition zones.

Preferably, said statistical model defines a first-degree linear equation associated with said second line describing the second plurality of display data.

Said statistical model is for example a linear regression.

Preferably, said measurement device is further configured to detect further measurement data representative of the distance between a third vertex and a fourth vertex of an electrochemical cell element to be deposited on a stacking plane.

Preferably, said processing unit is configured to obtain said further measurement data.

Preferably, said processing unit is configured, on the basis of said obtained further measurement data, to calculate a second distance between the third vertex of the electrochemical cell element and the fourth vertex of the electrochemical cell element.

Preferably, said processing unit is configured, on the basis of said plurality of display data obtained, to determine a third position identifying a position of the third vertex of the electrochemical cell element on the stacking plane.

Preferably, said processing unit is configured, on the basis of the calculation of the second distance and on the basis of the determination of the third position, to determine a fourth position identifying a position of the fourth vertex of the electrochemical cell element.

Preferably, said processing unit is configured to determine an initial position of the third vertex of the electrochemical cell element according to a pair of Cartesian coordinates in the Cartesian measurement plane.

Preferably, said processing unit is configured to determine an initial position of the fourth vertex of the electrochemical cell element according to a pair of Cartesian coordinates in the Cartesian measurement plane.

The initial position of the third vertex of the electrochemical cell element is identified on the conveyor.

The initial position of the fourth vertex of the electrochemical cell element is identified on the conveyor.

Preferably, on the basis of each contrast transition zone of the image of the measurement areas, the processing unit is further configured to determine the second distance between the third vertex and the fourth vertex of the electrochemical cell element.

Preferably, said processing unit is configured to compare said plurality of measurement data with the calibration matrix to determine said second distance between said third vertex and said fourth vertex.

Preferably, said measurement device is placed in an observational relationship with said calibration matrix to acquire said calibration matrix and transmit it to said processing unit.

Preferably, said processing unit is configured to determine said second distance between said third vertex and said fourth vertex as a distance between Cartesian coordinates of the initial position of the third vertex and Cartesian coordinates of the initial position of the fourth vertex in said Cartesian measurement plane.

Preferably, said processing unit is configured to determine a fifth measurement line on the basis of a fifth plurality of measurement data in a fifth measurement area and to determine a sixth measurement line on the basis of a sixth plurality of measurement data in a sixth measurement area.

Preferably, said processing unit is configured, on the basis of the determination of the fifth measurement line and the sixth measurement line, to calculate the point of intersection of the fifth measurement line with the sixth measurement line. This point of intersection uniquely identifies the initial position of the third vertex on the transport plane. Preferably, the position on the transport plane of the third vertex is expressed with a pair of Cartesian coordinates in the Cartesian measurement plane.

Preferably, said processing unit is configured to determine a seventh measurement line on the basis of a seventh plurality of measurement data in a seventh measurement area and to determine an eighth measurement line on the basis of an eighth plurality of measurement data in an eighth measurement area.

Preferably, said processing unit is configured, on the basis of the determination of the seventh measurement line and the eighth measurement line, to calculate the point of intersection of the seventh measurement line with the eighth measurement line. This point of intersection uniquely identifies the initial position of the fourth vertex on the transport plane. Preferably, the initial position of the fourth vertex on the transport plane is expressed with a pair of Cartesian coordinates in the Cartesian measurement plane.

The fifth measurement line is representative of the third edge of the electrochemical cell element.

The sixth measurement line is further representative of the second edge of the electrochemical cell element.

The seventh measurement line is further representative of the third edge of the electrochemical cell element.

The eighth measurement line is further representative of the fourth edge of the electrochemical cell element.

Preferably, the first reference position and the second reference position are expressed according to respective Cartesian coordinate intervals in said Cartesian survey plane.

Preferably, on the basis of the comparison between said first position and said second position of an electrochemical cell element with the first reference position and with the second reference position, it is provided for determining a suitability or an unsuitability of the stacking of electrochemical cell elements.

Preferably, said processing unit is configured to determine a suitability or an unsuitability of a stack of electrochemical cell elements on the basis of said comparison between said first position and said second position with said first reference position and second reference position.

Preferably, in the event that an unsuitability of the stacking of electrochemical cell elements is determined, the stacking of electrochemical cell elements is discarded from the manufacturing process.

Further features and advantages of the present invention will be better apparent from the following detailed description of a preferred embodiment thereof, with reference to the appended drawings and provided by way of indicative and nonlimiting example, wherein:

- Figure 1 is a schematic view of an electrochemical cell manufacturing machine in accordance with an aspect of the present invention;

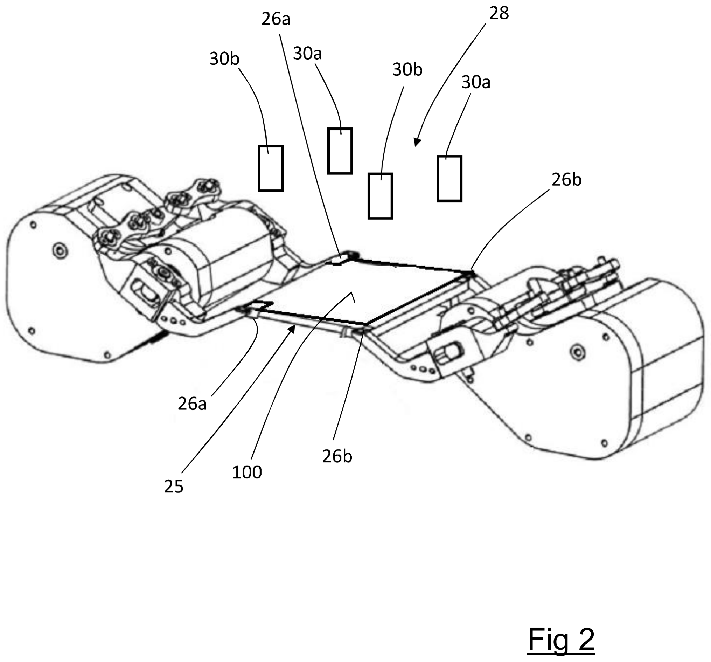

- Figure 2 is a schematic view of a part of a stacking device of electrochemical cell elements of the machine of Figure 1;

- Figures 3 and 4 are schematic representations from above of an electrochemical cell element placed on a stacking plane of the stacking device of Figure 2;

- Figure 5 is a schematic representation of a control area on the stacking plane of the stacking device;

- Figure 6 is a schematic representation of some components of an apparatus for identifying the position of vertices of electrochemical cell elements on the stacking plane of the stacking device;

- Figures 7 and 8 are schematic representations from above of an electrochemical cell element placed on a transfer device of the stacking device of Figure 2; and

- Figure 9 is a schematic representation of a measurement area on the conveyor of the stacking device.

The representations in the accompanying figures do not necessarily have to be understood in scale and do not necessarily respect the proportions between the various parts.

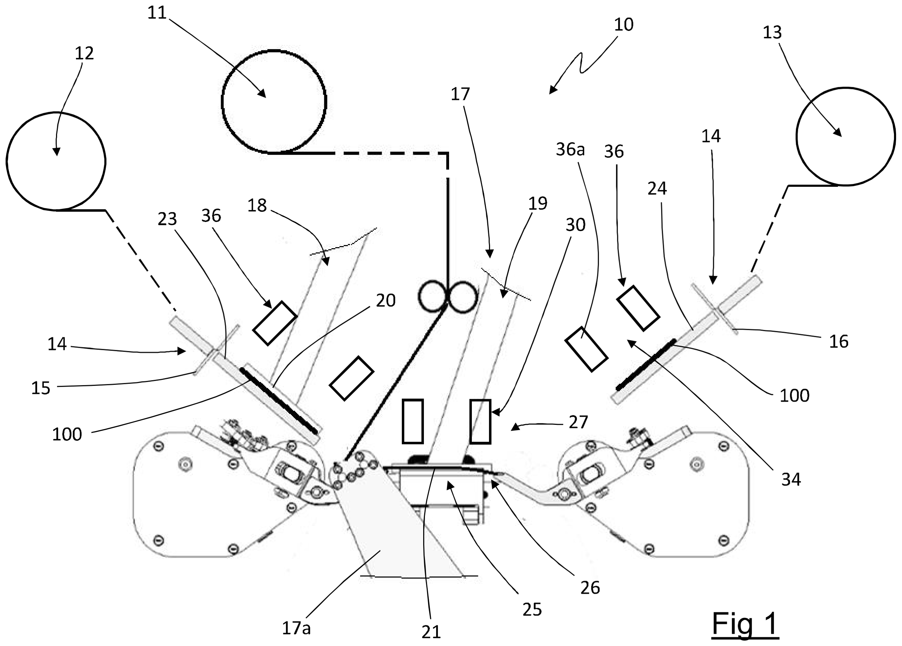

In Figure 1, an electrochemical cell manufacturing machine has been indicated as a whole with number 10.

The electrochemical cells are composed of a stacking of electrochemical cell elements.

The electrochemical cell elements 100 may be semi-finished products comprising alternating layers of separator, cathode electrode and anode electrode, wherein the cathode electrode and anode electrode are provided in the form of generally rectangular plates or sheets cut from continuous strips of material. The electrochemical cell elements may further be cathode electrodes, anode electrodes and one or more separator strips, wherein the cathode electrodes and the anode electrodes are provided in the form of generally rectangular plates or sheets cut from continuous strips of material. In this case, the separator may be a continuous strip arranged in a serpentine pattern between each anode electrode and each cathode electrode.

The following description will explicitly refer to the case where the electrochemical cell elements are cathode electrodes and anode electrodes. The person skilled in the art will understand that what is described below applies identically also to the case in which the electrochemical cell elements are semi-finished.

As schematically illustrated in Figure 1, the machine 10 comprises a first unwinding spindle 11 for a dielectric separator coil, a second unwinding spindle 12 for an electrochemical cell element 100 of a first type (for example an anode electrode) and a third unwinding spindle 13 for an electrochemical cell element 100 of a second type (for example a cathode electrode).

The machine 10 further comprises a forming station 14 of electrochemical cell elements comprising a first cutting device 15 and a second cutting device 16, schematized in Figure 1. The first cutting device 15 is configured to cut sheets of the electrochemical cell element 100 of the first type in such a way as to define a plurality of electrochemical cell elements 100 of the first type of substantially rectangular shape. The second cutting device 16 is configured to cut sheets of the electrochemical cell element 100 of the second type in such a way as to define a plurality of electrochemical cell elements 100 of the second type of substantially rectangular shape. In the case where the electrochemical cell element were a semi-finished product, the forming station 14 would also comprise a device for layering separator, cathode electrode and anode electrode in an alternated manner between them.

The machine 10 comprises, in a position subsequent to the forming station 14, a stacking device 17, as schematized in Figure 1.

The stacking device 17 comprises a first transfer device 18 of electrochemical cell elements 100 of the first type and a second transfer device 19 of electrochemical cell elements 100 of the second type.

The first transfer device 18 comprises, in the embodiment illustrated in Figure 1, a transfer plate 20 configured to contact and retain an electrochemical cell element 100 of the first type. The transfer plate 20 may for example comprise a suction device or suction cups (not illustrated).

Similarly, the second transfer device 19 comprises a transfer plate 21 configured to contact and retain an electrochemical cell element 100 of the second type. The transfer plate 21 may for example comprise a suction device or suction cups (not illustrated).

The stacking device 17 further comprises a conveyor 22 placed downstream of the forming station or integrated into the forming station 14. The conveyor 22 comprises a first conveyor branch 23 subservient to the first transfer device 18 and a second conveyor branch 24 subservient to the second transfer device 19.

The first transfer device 18 is movable between a pick-up position and a release position. In the pick-up position, the transfer plate 20 is substantially placed at the conveyor 22 (and in particular the first conveyor branch 23) and in contact with an electrochemical cell element 100 of the first type. The second transfer device 19 is movable between a pick-up position and a release position. In the pick-up position, the transfer plate 21 is substantially placed at the conveyor 22 (and in particular the second conveyor branch 24) and in contact with an electrochemical cell element 100 of the second type.

The stacking device 17 comprises a stacking plane 25 placed between the first transfer device 18 and the second transfer device 19.

When the first transfer device 18 is in the release position, the transfer plate 20 is placed at the stacking plane 25 to deposit an electrochemical cell element 100 of the first type on the stacking plane 25. When the second transfer device 19 is in the release position, the transfer plate 21 is placed at the stacking plane 25 to deposit an electrochemical cell element 100 of the second type on the stacking plane 25. The first transfer device 18 and the second transfer device 19 move substantially counterphase. The first transfer device 18 and the second transfer device 19 are never both in the respective release positions. When the first transfer device 18 is in the release position, the second transfer device 19 is in the pick-up position, or is moving between the pick-up position and the release position. When the second transfer device 19 is in the release position, the first transfer device 18 is in the pick-up position, or is moving between the pick-up position and the release position. The continuous movement of the first transfer device 18 and the second transfer device 19 from the respective pick-up positions to the respective release positions (and from the respective release positions to the respective pick-up positions) results in the formation of a stack of electrochemical cell elements 100 on the stacking plane 25.

The separator is fed as a continuous strip to the stacking plane 25. The stacking device 17 comprises a diverter 17a configured to operate on the separator. The diverter 17a operates at the stacking plane 25 and is arranged between the first transfer device 18 and the second transfer device 19. The diverter 17a has the function of positioning the separator between the electrochemical cell elements 100 of the first type and of the second type that are deposited on the stacking plane 25.

The stacking device 17 comprises grippers 26 which grasp and retain the electrochemical cell element 100 which is deposited on the stacking plane 25. The grippers 26 comprise first grippers 26a and second grippers 26b. The first grippers 26a are arranged on the side directed towards the first transfer device 18 and the second grippers 26b are directed towards the second transfer device 19. The grippers 26 grasp the electrochemical cell element 100 which is deposited on the stacking plane 25 at two vertices of the electrochemical cell element 100 and remain in that position even when a subsequent electrochemical cell element 100 is deposited. The grippers grasp this subsequent electrochemical cell element 100 at two vertices opposite the vertices on which the grippers 26 that grasped the previous electrochemical cell element 100 are acting. A further deposition of electrochemical cell element 100 results in the disengagement of the grippers 26 on the electrochemical cell element 100 deposited as first and in the grasping of the just deposited electrochemical cell element 100.

Each electrochemical cell element 100 comprises four edges each of which delimits an end of the electrochemical cell element. A first edge 101 of the electrochemical cell element 100 meets a second edge 102 of the electrochemical cell element 100 at a first vertex V1. A third edge 103 of the electrochemical cell element 100 meets the second edge 102 at a third vertex V2. A fourth edge 104 of the electrochemical cell element 100 meets the first edge 101 at a second vertex F1. The fourth edge 104 of the electrochemical cell element 100 meets the third edge 103 at a fourth vertex F2. The first edge 101 is substantially parallel to the third edge 103 and the second edge 102 is substantially parallel to the fourth edge 104.

The first edge 101 of an electrochemical cell element 100 is defined by the edge that is closer to the transfer device which deposited said electrochemical cell element 100. For example, when the electrochemical cell element 100 has been deposited by the first transfer device 18, the first edge 101 of said electrochemical cell element 100 is defined by the edge that is closer to the first transfer device 18. When the electrochemical cell element 100 has been deposited by the second transfer device 19, the first edge 101 of said electrochemical cell element 100 is defined by the edge that is closer to the second transfer device 19.

The first vertex V1 and the third vertex V2 of an electrochemical cell element 100 are defined by the vertices on which the grippers 26 are acting. For example, when a first electrochemical cell element 100 of the first type is deposited on the stacking plane, the grippers 26 grasp and retain said electrochemical cell element 100 of the first type at the first vertex and the third vertex V2. When a first electrochemical cell element 100 of the second type is deposited on the stacking plane above the first electrochemical cell element 100 of the first type, the grippers 26 grasp and retain said electrochemical cell element 100 of the second type at the corresponding first vertex and third vertex V2. When a second electrochemical cell element 100 of the first type is deposited on the stacking plane above the first electrochemical cell element 100 of the second type, the grippers 26 release the first electrochemical cell element 100 of the first type and grasp and retain the second electrochemical cell element 100 of the first type at the corresponding first vertex and third vertex V2. The second electrochemical cell element 100 of the first type is resting at its own second vertex **F1** and fourth vertex F2 on the grippers 26 that are retaining the first electrochemical cell element 100 of the second type.

The stacking device 17 comprises an apparatus 27 for identifying the position of electrochemical cell elements 100 deposited on the stacking plane 25.

The apparatus 27 comprises a detection device 28 placed in a display relationship with control areas 29 defined at the stacking plane 25. The control areas 29 are defined at the stacking plane 25 at expected position of receiving the electrochemical cell element 100. The control areas 29 lie on control surfaces arranged parallel to each other and parallel to the stacking plane 25. The control areas 29 are placed in a position more proximal to the conveyor that deposited the electrochemical cell element 100 on the stacking plane. The control areas 29 are placed in a position more proximal to the first vertex V1 and the third vertex V2 than to the second vertex **F1** and the fourth vertex F2.

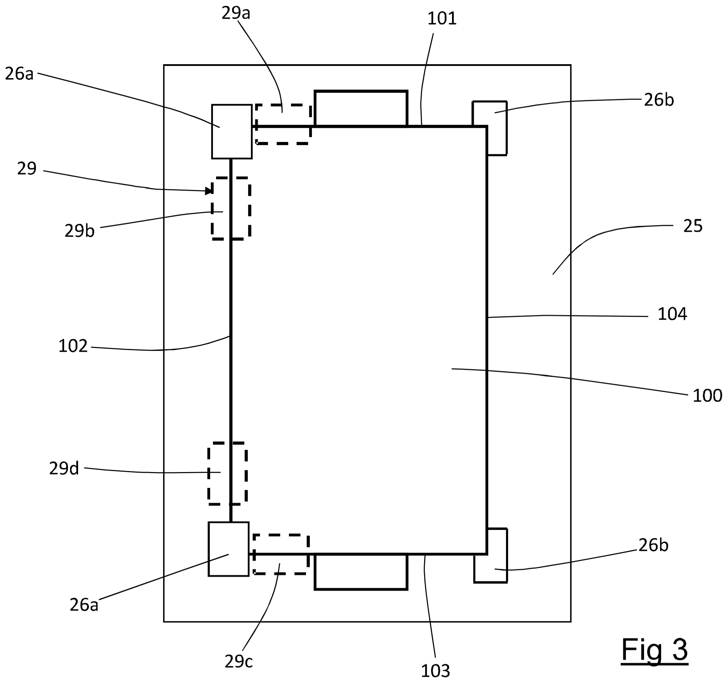

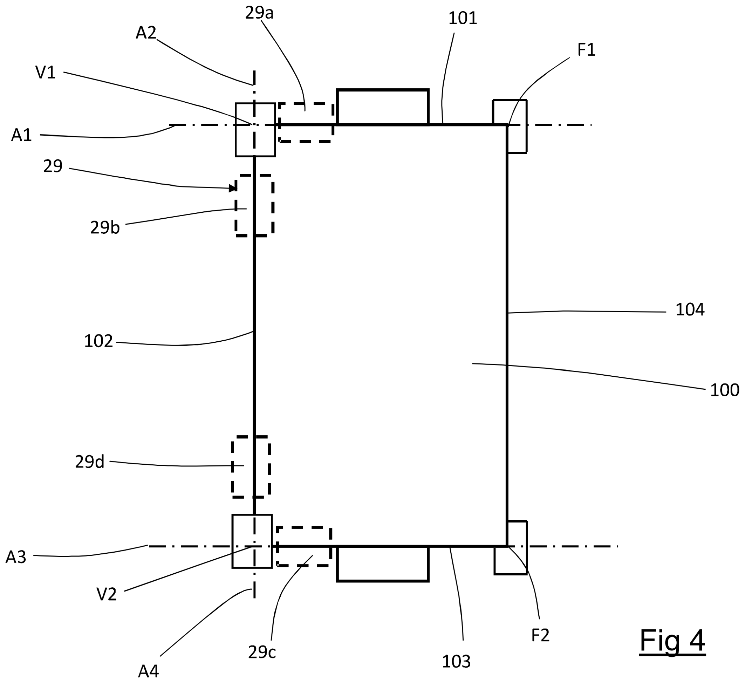

The control areas 29 comprise a first control area 29a defined at the expected position of the first edge 101 of the electrochemical cell element 100. The first control area 29a has a first dimension in a direction parallel to the first edge 101 and a second dimension in a direction parallel to the second edge 102 of the electrochemical cell element 100, as schematically illustrated in Figures 3 and 4.

The control areas 29 comprise a second control area 29b defined at the expected position of the second edge 102 of the electrochemical cell element 100. The second control area 29b has a first dimension in a direction parallel to the second edge 102 and a second dimension in a direction parallel to the first edge 101 of the electrochemical cell element 100, as schematically illustrated in Figures 3 and 4. The second control area 29a is closer to the first vertex V1 than to the third vertex V2.

The control areas 29 comprise a third control area 29c defined at the expected position of the third edge 103 of the electrochemical cell element 100. The third control area 29c has a first dimension in a direction parallel to the third edge 103 and a second dimension in a direction parallel to the second edge 102 of the electrochemical cell element 100, as schematically illustrated in Figures 3 and 4.

The control areas 29 comprise a fourth control area 29d defined at the expected position of the second edge 102 of the electrochemical cell element 100. The fourth control area 29d has a first dimension in a direction parallel to the second edge 102 and a second dimension in a direction parallel to the first edge 101 of the electrochemical cell element 100, as schematically illustrated in Figures 3 and 4. The fourth control area 29d is closer to the third vertex V2 than to the first vertex V1.

The detection device 28 comprises a plurality of optical detectors 30 configured to acquire images. Each optical detector 30 acquires images of one or more control areas 29. In an embodiment example, a first optical detector acquires images of the first control area 29a and the second control area 29b and a second optical detector acquires images of the third control area 29c and the fourth control area 29d when the control areas 29 are placed in a position more proximal to the first conveyor 18. A third optical detector acquires images of the first control area 29a and the second control area 29b and a fourth optical detector acquires images of the third control area 29c and the fourth control area 29d when the control areas 29 are placed in a position more proximal to the second conveyor 19. The optical detectors 30 may for example be a TV camera 30a or a camera.

The optical detectors 30 are positioned above the stacking plane 25. The optical detectors 30 simultaneously acquire images of the first control area 29a and images of the second control area 29b. The optical detectors 30 simultaneously acquire images of the third control area 29c and images of the fourth control area 29d.

The detection device 28 is configured to detect a first plurality of display data in the first control area 29a. The detection device 28 is configured to detect a second plurality of display data in the second control area 29b. The detection device 28 is configured to detect a third plurality of display data in the third control area 29c. The detection device 28 is configured to detect a fourth plurality of display data in the fourth control area 29d.

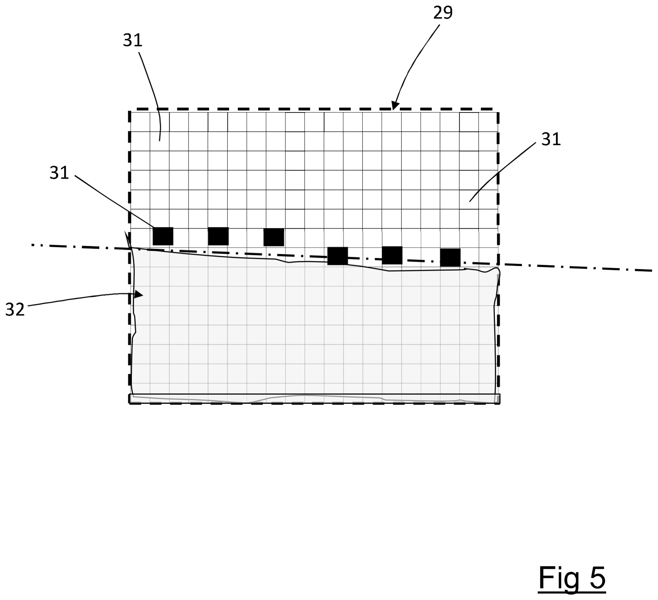

Each plurality of display data is represented by a plurality of contrast transition zones of the image acquired in the respective control area 29. Each image acquired in a control area 29 is composed of a plurality of minimum image units defined by pixels 31 organized according to a grid matrix 32, as schematically represented in Figure 5. The contrast transition zones of the image are identified by pixels 31 in which a predetermined difference in brightness with respect to adjacent pixels 31 is identified. This predetermined difference in brightness is rated on a grayscale ranging from white to black. Such a grayscale may comprise from 4 to 256 brightness levels. The predetermined difference in brightness between two adjacent pixels 31 may be defined by a difference comprised between 5 and 50 levels, preferably comprised between 5 and 30 levels, more preferably comprised between 5 and 20 levels, for example 10 levels of brightness in the grayscale. Figure 5 depicts in black some pixels 31 that identify the predetermined difference in brightness.

Each pixel 31 of each control area 29 is associated with a pair of coordinates in a same Cartesian survey plane.

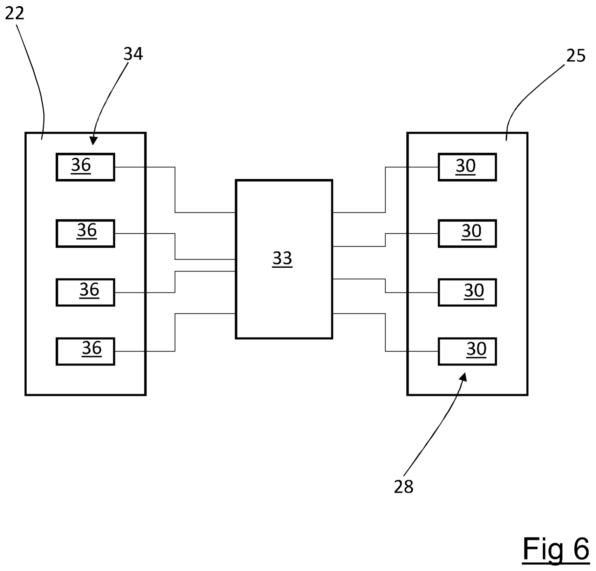

The apparatus 27 comprises a processing unit 33 schematized in Figure 6. The processing unit 33 is operatively associated with the detection device 28 to obtain the plurality of display data.

The processing unit 33 is configured to compare the display data with a calibration matrix. The detection device 28 is placed in an observational relationship with the calibration matrix to acquire the calibration matrix and transmit it to the processing unit. The calibration matrix comprises a plurality of reference points associated with the Cartesian survey plane wherein the distance between such reference points is known and predetermined. A pair of Cartesian coordinates in the Cartesian measurement plane is associated with each reference point.

The processing unit 33 is further configured to determine lines representing the respective edges of the electrochemical cell element 100. To this end, the processing unit 33, on the basis of the first plurality of display data obtained determines a first line A1 representative of the first edge 101 of the electrochemical cell element 100. The processing unit 33, on the basis of the second plurality of display data obtained determines a second line A2 representative of the second edge 102 of the electrochemical cell element 100. The processing unit 33, on the basis of the third plurality of display data obtained determines a third line A3 representative of the third edge 103 of the electrochemical cell element 100. The processing unit 33, on the basis of the fourth plurality of display data obtained determines a fourth line A4 further representative of the second edge 102 of the electrochemical cell element 100.

The determination of each line is implemented by the processing unit 33 by applying a statistical model to the plurality of contrast transition zones of the images in the respective control area 29. This statistical model determines the equation of a straight line for each of the first line A1, second line A2, third line A3 and fourth line A4, for example through a linear regression. This linear regression is based on the pairs of coordinates, in the Cartesian survey plane, of the pixels 31 in which the predetermined difference in brightness with respect to adjacent pixels 31 is identified. The equations of all straight lines are expressed in the same Cartesian survey plane.

By way of example, the equation of the straight line for the first line A1 is provided from the formula $y = m1x + q1$. The equation of the straight line for the second line A2 is provided from the formula $y = m2x + q'2$. The equation of the straight line for the third line A3 is provided from the formula $y = m3x + q3$. The equation of the straight line for the fourth line A4 is provided from the formula $y = m4x + q4$.

The processing unit 33 is further configured to calculate the point of intersection of the first line A1 with the second line A2 on the basis of the determination of the first line and the second line. This point of intersection uniquely defines the final position of the first vertex V1 of the electrochemical cell element 100 when placed on the stacking plane 25.

This operation is performed by the processing unit 33 by calculating the point of intersection between the equation of the straight line for the first line A1 and the equation of the straight line for the second line A2. This point of intersection is expressed by a pair of coordinates V1x, V1y in the Cartesian survey plane.

The processing unit 33 is further configured to calculate the point of intersection of the third line A3 with the fourth line A4 on the basis of the determination of the third line and the fourth line. This point of intersection uniquely defines the final position of the third vertex V2 of the electrochemical cell element 100 when placed on the stacking plane 25.

This operation is performed by the processing unit 33 by calculating the point of intersection between the equation of the straight line for the third line A3 and the equation of the straight line for the fourth line A4. This point of intersection is expressed by a pair of coordinates V2x, V2y in the Cartesian survey plane.

Alternatively, the processing unit 33 is configured to calculate the point of intersection of the third line A3 with the second line A2 on the basis of the determination of the third line and the second line. This point of intersection uniquely defines the third vertex V2 of the electrochemical cell element 100.

This operation is performed by the processing unit 33 by calculating the point of intersection between the equation of the straight line for the third line A3 and the equation of the straight line for the second line A2. This point of intersection is expressed by a pair of coordinates V2x, V2y in the Cartesian survey plane.

The vertices of the electrochemical cell element 100 that can be hidden from direct view by the grippers 26 are then uniquely determined.

The apparatus 27 further comprises a measurement device 34. The measurement device 34 is configured to take measurement data representative of the distance between the first vertex V1 and the second vertex **F1** of the electrochemical cell element 100 that must be deposited on the stacking plane 25. The measurement device 34 may also be configured to take measurement data representative of the distance between the third vertex V2 and the fourth vertex F2 of the electrochemical cell element 100 that must be deposited on the stacking plane 25.

The measurement device 34 is placed in a display relationship with measurement areas 35 defined at the conveyor 22. The measurement areas 35 are defined at the first conveyor branch 23 and the second conveyor branch 24 in expected positions of receiving an electrochemical cell element 100 of the first type and an electrochemical cell element 100 of the second type. The measurement areas 35 lie on measurement planes arranged parallel to each other and parallel to the first conveyor branch 23 and the second conveyor branch 24. The measurement areas 35 are identical on both the first conveyor branch 23 and the second conveyor branch 24. Thus, in the following reference will be made to measurement areas 35 defined at the conveyor 22 to describe both the measurement areas 35 on the first conveyor branch 23 and the measurement areas 35 on the second conveyor branch 24.

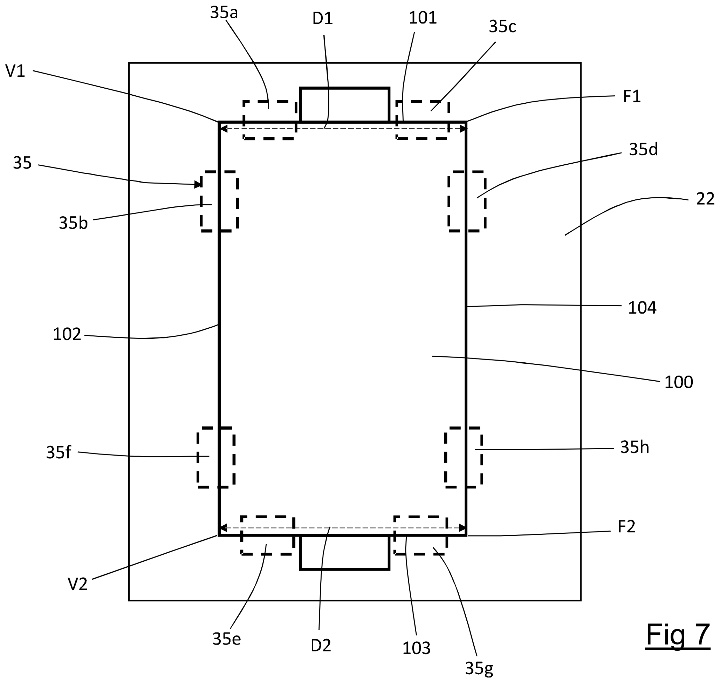

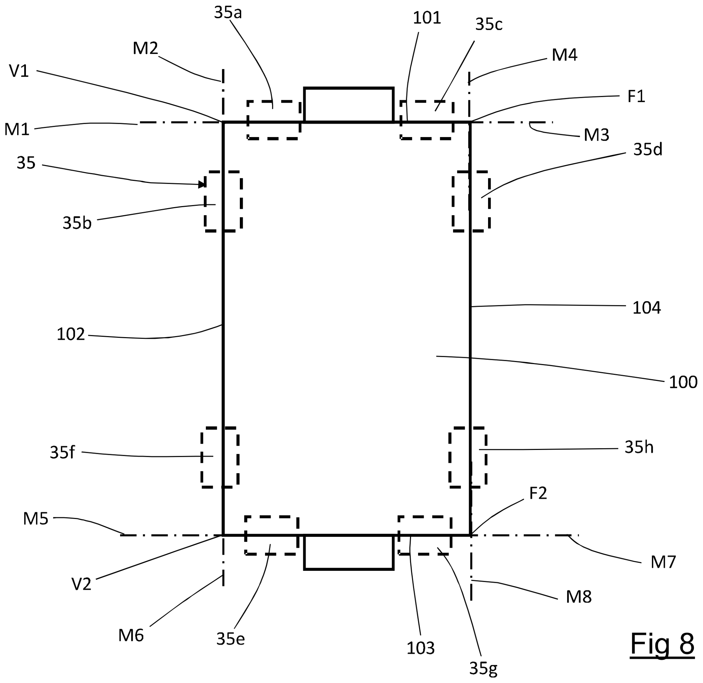

The measurement areas 35 comprise a first measurement area 35a defined at the expected position of the first edge 101 of the electrochemical cell element 100 on the conveyor 22. The first measurement area 35a has a first dimension in a direction parallel to the first edge 101 and a second dimension in a direction parallel to the second edge 102 of the electrochemical cell element 100, as schematically illustrated in Figures 7 and 8. The first measurement area 35a is closer to the first vertex V1 than to the third vertex V2 and than to the second vertex F1.

The measurement areas 35 comprise a second measurement area 35b defined at the expected position of the second edge 102 of the electrochemical cell element 100. The second measurement area 35b has a first dimension in a direction parallel to the second edge 102 and a second dimension in a direction parallel to the first edge 101 of the electrochemical cell element 100, as schematically illustrated in Figure 7 and 8. The second measurement area 35b is closer to the first vertex V1 than to the third vertex V2 and than to the second vertex F1.

The measurement areas 35 comprise a third measurement area 35c defined at the expected position of the first edge 101 of the electrochemical cell element 100. The third measurement 35c has a first dimension in a direction parallel to the first edge 101 and a second dimension in a direction parallel to the fourth edge 104 of the electrochemical cell element 100, as schematically illustrated in Figures 7 and 8. The third measurement area 35c is closer to the second vertex **F1** than to the fourth vertex F2 and than to the first vertex V1.

The measurement areas 35 comprise a fourth measurement area 35d defined at the expected position of the fourth edge 104 of the electrochemical cell element 100. The fourth measurement area 35d has a first dimension in a direction parallel to the fourth edge 104 and a second dimension in a direction parallel to the first edge 101 of the electrochemical cell element 100, as schematically illustrated in Figures 7 and 8. The fourth measurement area 35d is closer to the second vertex **F1** than to the fourth vertex F2 and than to the first vertex V1.

The measurement areas 35 comprise a fifth measurement area 35e defined at the expected position of the third edge 103 of the electrochemical cell element 100 on the conveyor 22. The fifth measurement area 35e has a first dimension in a direction parallel to the third edge 103 and a second dimension in a direction parallel to the second edge 102 of the electrochemical cell element 100, as schematically illustrated in Figures 7 and 8. The fifth measurement area 35e is closer to the third vertex V2 than to the first vertex V1 and than to the fourth vertex F2.

The measurement areas 35 comprise a sixth measurement area 35f defined at the expected position of the second edge 102 of the electrochemical cell element 100. The sixth measurement area 35f has a first dimension in a direction parallel to the second edge 102 and a second dimension in a direction parallel to the third edge 103 of the electrochemical cell element 100, as schematically illustrated in Figures 7 and 8. The sixth measurement area 35f is closer to the third vertex V2 than to the first vertex V1 and than to the fourth vertex F2.

The measurement areas 35 comprise a seventh measurement area 35g defined at the expected position of the third edge 103 of the electrochemical cell element 100. The seventh measurement 35g has a first dimension in a direction parallel to the third edge 103 and a second dimension in a direction parallel to the fourth edge 104 of the electrochemical cell element 100, as schematically illustrated in Figures 7 and 8. The seventh measurement area 35g is closer to the fourth vertex F2 than to the third vertex V2 and than to the second vertex F1.

The measurement areas 35 comprise an eighth measurement area 35h defined at the expected position of the fourth edge 104 of the electrochemical cell element 100. The eighth measurement area 35h has a first dimension in a direction parallel to the fourth edge 104 and a second dimension in a direction parallel to the third edge 103 of the electrochemical cell element 100, as schematically illustrated in Figures 7 and 8. The eighth measurement area 35h is closer to the fourth vertex F2 than to the third vertex V2 and than to the second vertex F1.

The measurement device 34 comprises a plurality of optical detectors 36 configured to capture images. Each optical detector 36 acquires images of one or more measurement areas 35. In an embodiment example, a first optical detector acquires images of the first measurement area 35a and the second measurement area 35b, and a second optical detector acquires images of the third measurement area 35c and the fourth measurement area 35d. A third optical detector acquires images of the fifth measurement area 35e and the sixth measurement area 35f, and a fourth optical detector acquires images of the seventh measurement area 35g and the eighth measurement area 35h. The optical detectors 36 may for example be a TV camera 36a or a camera. The optical detectors 36 of the measurement device 34 may be identical to the optical detectors 30 of the detecting device 28.

The optical detectors 36 are positioned above the conveyor 22. The optical detectors 36 simultaneously acquire images of the first measurement area 35a and images of the second measurement area 35b. The optical detectors 36 simultaneously acquire images of the third measurement area 35c and images of the fourth measurement area 35d. The optical detectors 36 simultaneously acquire images of the fifth measurement area 35e and images of the sixth measurement area 35f. The optical detectors 36 simultaneously acquire images of the seventh measurement area 35g and images of the eighth measurement area 35h. In some embodiments, the optical detectors 36 simultaneously acquire images of all measurement areas 35a, 35b, 35c, 35d, 35e, 35f, 35g.

The measurement device 34 is configured to detect a first plurality of measurement data in the first measurement area 35a. The measurement device 34 is configured to detect a second plurality of measurement data in the second measurement area 35b. The measurement device 34 is configured to detect a third plurality of measurement data in the third measurement area 35c. The measurement device 34 is configured to detect a fourth plurality of measurement data in the fourth measurement area 35d. The measurement device 34 is configured to detect a fifth plurality of measurement data in the fifth measurement area 35e. The measurement device 34 is configured to detect a sixth plurality of measurement data in the sixth measurement area 35f. The measurement device 34 is configured to detect a seventh plurality of measurement data in the seventh measurement area 35g. The measurement device 34 is configured to detect an eighth plurality of measurement data in the eighth measurement area 35h.

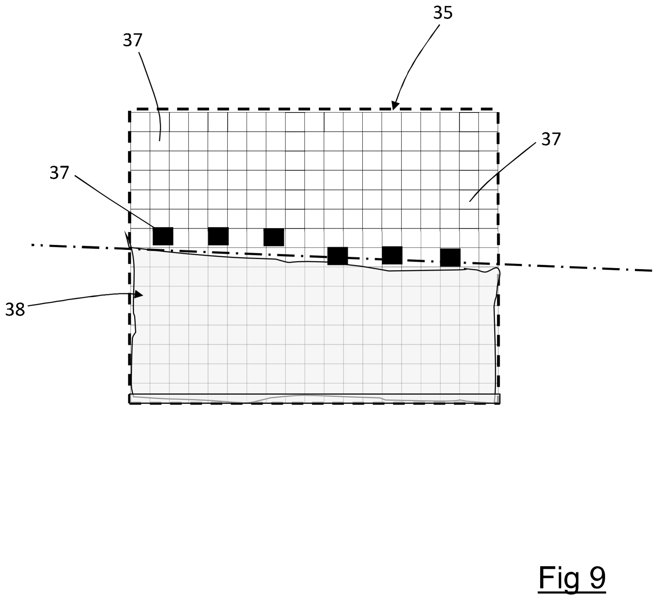

Each plurality of measurement data is represented by a plurality of contrast transition zones of the image acquired in the respective measurement area 35. Each image acquired in a measurement area 35 is composed of a plurality of minimum image units defined by pixels 37 organized according to a grid matrix 38, as schematically represented in Figure 9. The contrast transition zones of the image are identified by pixels 37 in which a predetermined difference in brightness with respect to adjacent pixels 37 is identified. This predetermined difference in brightness is rated on a grayscale ranging from white to black. Such a grayscale may comprise from 4 to 256 brightness levels. The predetermined difference in brightness between two adjacent pixels 37 may be defined by a difference comprised between 5 and 50 levels, preferably comprised between 5 and 30 levels, more preferably comprised between 5 and 20 levels, for example 10 levels of brightness in the grayscale. Figure 9 depicts in black some pixels 37 that identify the predetermined difference in brightness.

Each pixel 37 of each measurement area 35 is associated with a pair of coordinates in a same Cartesian measurement plane.

The processing unit 33 is operatively associated with the measurement device 34 to obtain the plurality of measurement data.

The processing unit 33 is configured to compare the measurement data with a calibration matrix. The measurement device 34 is placed in an observational relationship with the calibration matrix to acquire the calibration matrix and transmit it to the processing unit 33. The calibration matrix comprises a plurality of reference points associated with the Cartesian measurement plane wherein the distance between such reference points is known and predetermined. A pair of Cartesian coordinates in the Cartesian measurement plane is associated with each reference point.

The processing unit 33 is further configured to determine measurement lines representing the respective edges of the electrochemical cell element 100 placed on the conveyor 22. To this end, the processing unit 33, on the basis of the first plurality of measurement data obtained, determines a first measurement line M1 representative of the first edge 101 of the electrochemical cell element 100. The processing unit 33, on the basis of the second plurality of measurement data obtained determines a second measurement line M2 representative of the second edge 102 of the electrochemical cell element 100. The processing unit 33, on the basis of the third plurality of measurement data obtained determines a third measurement line M3 further representative of the first edge 101 of the electrochemical cell element 100. The processing unit 33, on the basis of the fourth plurality of measurement data obtained determines a fourth measurement line M4 representative of the fourth edge 104 of the electrochemical cell element 100. The processing unit 33, on the basis of the fifth plurality of measurement data obtained determines a fifth measurement line M5 representative of the third edge 103 of the electrochemical cell element 100. The processing unit 33, on the basis of the sixth plurality of measurement data obtained determines a sixth measurement line M6 further representative of the second edge 102 of the electrochemical cell element 100. The processing unit 33, on the basis of the seventh plurality of measurement data obtained determines a seventh measurement line M7 further representative of the third edge 103 of the electrochemical cell element 100. The processing unit 33, on the basis of the eighth plurality of measurement data obtained determines an eighth measurement line M8 further representative of the fourth edge 104 of the electrochemical cell element 100.

The determination of each line is implemented by the processing unit 33 by applying a statistical model to the plurality of contrast transition zones of the images in the respective measurement area 35. Such a statistical model determines the equation of a straight line for each of the first measurement line M1, second measurement line M2, third measurement line M3 and fourth measurement line M4, for example through a linear regression. This statistical model also determines the equation of a straight line for each of the fifth measurement line M5, sixth measurement line M6, seventh measurement line M7 and eighth measurement line M8, for example through a linear regression.

This linear regression is based on the pairs of coordinates, in the Cartesian measurement plane, of the pixels 37 in which the predetermined difference in brightness with respect to adjacent pixels 37 is identified. The equations of all straight lines are expressed in the same Cartesian measurement plane.

By way of example, the equation of the straight line for the first measurement line M1 is provided from the formula $y = M1x + Q1$. The equation of the straight line for the second measurement line M2 is provided from the formula $y = M2x + Q2$. The equation of the straight line for the third measurement line M3 is provided from the formula $y = M3x + Q3$. The equation of the straight line for the fourth measurement line M4 is provided from the formula $y = M4x + Q4$. The equation of the straight line for the fifth measurement line M5 is provided from the formula $y = M5x + Q5$. The equation of the straight line for the sixth measurement line M6 is provided from the formula $y = M6x + Q6$. The equation of the straight line for the seventh measurement line M7 is provided from the formula $y = M7x + Q7$. The equation of the straight line for the eighth measurement line M8 is provided from the formula $y = M8x + Q8$.

The processing unit 33 is configured to calculate the point of intersection of the first measurement line M1 with the second measurement line M2 on the basis of the determination of the first measurement line and the second measurement line. This point of intersection uniquely defines the initial position of the first vertex V1 of the electrochemical cell element 100 when placed on the conveyor 22.

This operation is performed by the processing unit 33 by calculating the point of intersection between the equation of the straight line for the first measurement line M1 and the equation of the straight line for the second measurement line M2. This point of intersection is expressed by a pair of coordinates V1x1, V1y1 in the Cartesian measurement plane.

The processing unit 33 is further configured to calculate the point of intersection of the third measurement line M3 with the fourth measurement line M4 on the basis of the determination of the third measurement line and the fourth measurement line. This point of intersection uniquely defines the initial position of the second vertex F1 of the electrochemical cell element 100 when placed on the conveyor 22.

This operation is performed by the processing unit 33 by calculating the point of intersection between the equation of the straight line for the third measurement line M3 and the equation of the straight line for the fourth measurement line M4. This point of intersection is expressed by a pair of coordinates F1x1, F1y1 in the Cartesian measurement plane.

The processing unit 33 is configured to calculate a first distance D1 between the first vertex V1 of the electrochemical cell element 100 and the second vertex F1 of the electrochemical cell element 100 when placed on the conveyor 22.

This operation is performed by the processing unit by calculating the distance, in the Cartesian measurement plane, between the pair of coordinates V1x1, V1y1 of the first vertex V1 and the pair of coordinates F1x1, F1y1 of the second vertex F1. This distance is calculated as the minimum distance between the two pairs of coordinates V1x1, V1y1 and F1x1, F1y1.

The processing unit 33 is further configured to calculate the point of intersection of the fifth measurement line M5 with the sixth measurement line M6 on the basis of the determination of the fifth measurement line and the sixth measurement line. This point of intersection uniquely defines the initial position of the third vertex V2 of the electrochemical cell element 100 when placed on the conveyor 22.

This operation is performed by the processing unit 33 by calculating the point of intersection between the equation of the straight line for the fifth measurement line M5 and the equation of the straight line for the sixth measurement line M6. This point of intersection is expressed by a pair of coordinates V2x1, V2y1 in the Cartesian measurement plane.

The processing unit 33 is further configured to calculate the point of intersection of the seventh measurement line M7 with the eighth measurement line M8 on the basis of the determination of the seventh measurement line and the eighth measurement line. This point of intersection uniquely defines the initial position of the fourth vertex F2 of the electrochemical cell element 100 when placed on the conveyor 22.

This operation is performed by the processing unit 33 by calculating the point of intersection between the equation of the straight line for the seventh measurement line M7 and the equation of the straight line for the eighth measurement line M8. This point of intersection is expressed by a pair of coordinates F2x1, F2y1 in the Cartesian measurement plane.

The processing unit 33 may also be configured to calculate a second distance D2 between the third vertex V2 of the electrochemical cell element 100 and the fourth vertex F2 of the electrochemical cell element 100 when placed on the conveyor 22.

This operation is performed by the processing unit by calculating the distance, in the Cartesian measurement plane, between the pair of coordinates V2x1, V2y1 of the third vertex V2 and the pair of coordinates F2x1, F2y1 of the fourth vertex F2. This distance is calculated as the minimum distance between the two pairs of coordinates V2x1, V2y1 and F2x1, F2y1. When the second edge 102 and the fourth edge 104 of the electrochemical cell element 100 are parallel and when the first edge 101 and the third edge 103 of the electrochemical cell element 100 are parallel, the first distance D1 is equal to the second distance D2.

The processing unit 33 is configured to determine a second position identifying the position of the second vertex F1 of the electrochemical cell element 100 once said electrochemical cell element 100 lies parallel to the stacking plane 25. This determination is made on the basis of the calculation of the first distance D1 and on the basis of the determination of the first position of the first vertex V1 of the electrochemical cell element 100 on the stacking plane 25. The position of the second vertex F1 is expressed with a pair of coordinates F1x, F1y in the Cartesian survey plane.

This operation is performed by the processing unit 33 by adding the first distance D1 to the coordinates V1x, V1y of the first vertex V1 when the electrochemical cell element 100 is placed on the stacking plane 25. In a possible embodiment, the processing unit 33 determines the angular coefficient m11 of the straight line for the first line A1 and adds the first distance D1, projected along said angular coefficient m11, to the coordinates V1x, V1y of the first vertex V1. A possible mathematical formula applied by the processing unit 33 to determine the position of the second vertex F1 is:

$$F1x = V1x + [(D1)^2 / (1+(m11)^2)]^{1/2}$$

$$F1y = V1y + m11 [(D1)^2 / (1+(m11)^2)]^{1/2}$$

The processing unit 33 is further configured to determine a fourth position identifying the position of the fourth vertex F2 of the electrochemical cell element 100 once said electrochemical cell element 100 lies parallel to the stacking plane 25. This determination is made on the basis of the calculation of the second distance D2 and on the basis of the determination of the position of the first vertex V2 of the electrochemical cell element 100 on the stacking plane 25. The position of the fourth vertex F2 is expressed with a pair of coordinates F2x, F2y in the Cartesian survey plane.

This operation is performed by the processing unit 33 by adding the second distance D2 to the coordinates V2x, V2y of the third vertex V2 when the electrochemical cell element 100 is placed on the stacking plane 25. In a possible embodiment, the processing unit 33 determines the angular coefficient m12 of the straight line for the third line A3 and adds the second distance D2, projected along said angular coefficient m12, to the coordinates V2x, V2y of the third vertex V2. A possible mathematical formula applied by the processing unit 33 to determine the position of the fourth vertex F2 is:

$$F2x = V2x + [(D2)^2 / (1+(m12)^2)]^{1/2}$$

$$F2y = V2y + m12\,[(D2)^2 / (1+(m12)^2)]^{1/2}$$

In use, the first distance D1 is calculated on the electrochemical cell element 100 when this electrochemical cell element 100 is placed on the conveyor 22 and has not yet been deposited on the stacking plane 25.

The second distance D2 on the electrochemical cell element 100 is optionally also calculated when this electrochemical cell element 100 is placed on the conveyor 22 and has not yet been deposited on the stacking plane 25.

When the electrochemical cell element is deposited on the stacking plane 25, the electrochemical cell element is retained by the grippers 26 at the first vertex V1 and the third vertex V2. The second vertex F1 and the fourth vertex F2 rest on the grippers 26 that are retaining the underlying electrochemical cell element 100 (previously placed on the stacking plane 25).

At this point, the position of the first vertex V1 of the electrochemical cell 100 placed on the stacking plane 25 is calculated. The position of the third vertex V2 of the electrochemical cell 100 placed on the stacking plane 25 is also calculated.

On the basis of the calculated position of the first vertex V1 and of the first distance D1, the second position of the second vertex F1 of the electrochemical cell element 100 on the stacking plane 25 is determined. This second position of the second vertex F1 is representative of the actual position that the second vertex F1 will assume on the lying plane 25 once the grippers 26 on which the second vertex F1 of the electrochemical cell element 100 rests are removed. This second position of the second vertex F1 is therefore representative of the actual position that the second vertex F1 will assume on the stacking plane 25.

On the basis of the calculated position of the third vertex V2 and of the second distance D2, the fourth position of the fourth vertex F2 of the electrochemical cell element 100 on the stacking plane 25 is also determined. This fourth position of the fourth vertex F2 is representative of the actual position that the fourth vertex F2 will assume on the lying plane 25 once the grippers 26 on which the fourth vertex F2 of the electrochemical cell element 100 rests are removed. This fourth position of the fourth vertex F2 is therefore representative of the actual position that the fourth vertex F2 will assume on the stacking plane 25.

At this point, the processing unit 33 compares the position of the first vertex V1 and the second vertex F1 on the stacking plane 25 with a first reference position and with a second reference position. Similarly, the processing unit 33 compares the position of the third vertex V2 and the fourth vertex F2 on the stacking plane 25 with a third reference position and with a fourth reference position.

The first reference position and the second reference position are predetermined and representative of design positions that the first vertex V1 and the second vertex F1 of the electrochemical cell element 100 must assume within the stack of electrochemical cell elements 100. The third reference position and the fourth reference position are predetermined and representative of design positions that the third vertex V2 and the fourth vertex F2 of the electrochemical cell element 100 must assume within the stack of electrochemical cell elements 100.

In the event that any of the above comparisons highlights a deviation between a calculated vertex position and a corresponding design position, the stacking of electrochemical cell elements 100 being formed on the stacking plane is deemed unsuitable and discarded, for example to be disassembled and recycled.

Such a deviation could be due to an inaccurate transfer by the first or second transfer device 18, 19 or to an inaccurate cutting operation of the electrochemical cell element or to a combination of both events.

**Claims**

1. Apparatus (27) for identifying the position of electrochemical cell elements in a stacking plane of a stacking device in an electrochemical cell manufacturing machine, said apparatus comprising:

   a measurement device (34) configured to take measurement data representative of the distance between a first vertex (V1) and a second vertex (F1) of an electrochemical cell element (100) to be deposited on a stacking plane (25);
   a detection device (28) placed in a display relationship with control areas (29) both defined at a stacking plane (25), wherein the detection device (28) is configured to detect a plurality of display data of said electrochemical cell element (100) in said control areas (29);

a processing unit (33) operatively associated with said measurement device (34) and said detection device (28) and configured to:

> obtain said measurement data;
> on the basis of said measurement data obtained, calculate a first distance (D1) between the first vertex (V1) of the electrochemical cell element (100) and the second vertex (F1) of the electrochemical cell element (100);
> obtain said plurality of display data;
> on the basis of said plurality of display data obtained, determine a first position identifying a position of the first vertex (V1) of the electrochemical cell element (100) on the stacking plane (25);
> on the basis of the calculation of the first distance (D1) and on the basis of the determination of the first position, determine a second position identifying a position of the second vertex (F1) of the electrochemical cell element (100) on the stacking plane (25);
> wherein said processing unit (33) is configured to compare said first position and said second position with a predetermined first reference position and with a predetermined second reference position representative of design positions that the first vertex (V1) and the second vertex (F1) of the electrochemical cell element (100) must assume within the stack of electrochemical cell elements.

2. Apparatus (27) according to claim 1, wherein said control areas (29) comprise a first control area (29a) and wherein said detection device (28) is configured to detect a first plurality of display data in said first control area (29a); wherein said processing unit (33) is configured to:
on the basis of said first plurality of display data, determine a first line (A1) representative of a first edge (101) of the electrochemical cell element (100).

3. Apparatus (27) according to claim 2, wherein said processing unit (33) is configured to determine said second position on the basis of the determination of said first line (A1), on the basis of the determination of said first position and on the basis of said first distance (D1).

4. Apparatus (27) according to any one of the preceding claims, wherein said processing unit (33) is configured to determine said first position according to a first Cartesian coordinate and according to a further first Cartesian coordinate in a Cartesian survey plane and to determine said second position according to a second Cartesian coordinate and according to a further second Cartesian coordinate in said Cartesian survey plane.

5. Apparatus (27) according to claim 1, wherein said processing unit (33) is configured to determine a suitability or an unsuitability of a stack of electrochemical cell elements (100) on the basis of said comparison between said first position and said second position with said first reference position and second reference position.

6. Apparatus (27) according to any one of the preceding claims, wherein said measurement device (34) is further configured to detect further measurement data representative of the distance between a third vertex (V2) and a fourth vertex (F2) of an electrochemical cell element (100) to be deposited on a stacking plane (25);
said processing unit (33) being configured to:

> obtain said further measurement data;
> on the basis of said further measurement data obtained, calculate a second distance (D2) between the third vertex (V2) of the electrochemical cell element (100) and the fourth vertex (F2) of the electrochemical cell element (100);
> on the basis of said plurality of display data obtained, determine a third position identifying a position of the third vertex (V2) of the electrochemical cell element (100);
> on the basis of the calculation of the second distance (D2) and on the basis of the determination of the third position, determine a fourth position identifying a position of the fourth vertex (F2) of the electrochemical cell element (100).

7. Apparatus (27) according to any one of the preceding claims, wherein said measurement device (34) is placed in a display relationship with measurement areas (35) for detecting a plurality of measurement data of said electrochemical cell element (100) in said measurement areas (35).

8. Apparatus (27) according to claim 7, wherein said plurality of measurement data is represented by a plurality of contrast transition zones in images acquired in said measurement areas (35).

9. Apparatus (27) according to claim 7 or 8, wherein said processing unit (33) is configured to compare said plurality of measurement data with a calibration matrix to determine said first distance (D1).

10. Stacking device (17) of an electrochemical cell manufacturing machine comprising:

    a stacking plane (25) for electrochemical cell elements (100);
    a conveyor (22) for feeding electrochemical cell elements (100) towards the stacking plane (25);
    grippers (26) to grasp an electrochemical cell element (100) deposited on the stacking plane (25);
    an apparatus (27) for identifying the position of electrochemical cell elements according to any one of the preceding claims, wherein said measurement device (34) is placed at said conveyor (22) and said detection device (28) is placed at said stacking plane (25).

11. Machine (10) for manufacturing electrochemical cells, comprising:

    a forming station (14) of electrochemical cell elements (100);
    a stacking device (17) according to claim 10.

12. Method for identifying the position of electrochemical cell elements in a stacking plane of a stacking device in an electrochemical cell manufacturing machine, the method comprising:

    determining a first distance (D1) between a first vertex (V1) of an electrochemical cell element (100) and a second vertex (F1) of the electrochemical cell element (100);
    detecting a plurality of display data of said electrochemical cell element (100) in control areas (29) located at a stacking plane (25);
    on the basis of said plurality of display data calculating a first position of the first vertex (V1) of the electrochemical cell element (100) on the stacking plane (25);
    on the basis of the first calculated position and the first distance (D1), determining a second position of the second vertex (F1) of the electrochemical cell element (100) on the stacking plane (25);
    on the basis of the calculation of the first position of the first vertex (V1) of the electrochemical cell element (100) on the stacking plane and on the basis of the determination of the second position of the second vertex (F1) of the electrochemical cell element (100) on the stacking plane, comparing said first position and said second position with a first reference position and with a second reference position representative of design positions that the first vertex (V1) and the second vertex (F1) of the electrochemical cell element (100) must assume within the stack of electrochemical cell elements.

13. Electrochemical cell manufacturing method, the method comprising:

    feeding electrochemical cell elements (100) to an stacking plane (25);
    placing an electrochemical cell element (100) on the stacking plane (25) and
    retaining (26) said electrochemical cell element (100) on said stacking plane (25) with grippers;
    identifying the position of the electrochemical cell element (100) on the stacking plane (25) by implementing a method in accordance with claim 12.

Fig 1

EP 4 765 297 A1

Fig 2

EP 4 765 297 A1

Fig 3

Fig 4

EP 4 765 297 A1

Fig 5

Fig 6

Fig 7

EP 4 765 297 A1

25

Fig 8

EP 4 765 297 A1

Fig 9

Europäisches
Patentamt
European
Patent Office
Office européen
des brevets

# EUROPEAN SEARCH REPORT

**Application Number**

EP 25 22 2453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/343986 A1 (BAN JINHO [KR]) 26 October 2023 (2023-10-26) * paragraphs [0002], [0070], [0077], [0103] - [0105]; figures 2-4,15-18 * ----- | 1-13 | INV. H01M10/0583 H01M10/0585 H01M10/04 |
| Y | WO 2024/172551 A1 (SK ON CO LTD [KR]) 22 August 2024 (2024-08-22) * refer to DE 21 2024000147 U1 for translation * & DE 21 2024 000147 U1 (SK ON CO LTD [KR]) 24 September 2025 (2025-09-24) * paragraphs [0008], [0057], [0058], [0082] - [0088], [0130] - [0134], [0136] - [0137]; figures 5,6,11 * ----- | 1-13 | |
| Y | CN 115 763 995 A (CHONGQING TAILAN NEW ENERGY CO LTD) 7 March 2023 (2023-03-07) * paragraphs [0127], [0137] - [0139] * ----- | 8 | |
| A | WO 2023/217521 A1 (MB ATECH GMBH [DE]) 16 November 2023 (2023-11-16) * figure 2 * ----- | 1,12 | TECHNICAL FIELDS SEARCHED (IPC) |
| A | US 2023/352719 A1 (YAMASHITA MANABU [JP]) 2 November 2023 (2023-11-02) * paragraphs [0159] - [0165]; figures 12,14,15 * ----- | 1,12 | G01B G06T H01M G06V |

The present search report has been drawn up for all claims

| Place of search | Date of completion of the search | Examiner |
|---|---|---|
| The Hague | 16 April 2026 | Habermann, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 2453

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2026

| Patent document cited in search report | | | Publication date | Patent family member(s) | | | Publication date |
|---|---|---|---|---|---|---|---|
| US 2023343986 | A1 | | 26-10-2023 | CN | 116936900 | A | 24-10-2023 |
| | | | | KR | 20230150104 | A | 30-10-2023 |
| | | | | US | 2023343986 | A1 | 26-10-2023 |
| WO 2024172551 | A1 | | 22-08-2024 | CN | 120642089 | A | 12-09-2025 |
| | | | | DE | 212024000147 | U1 | 24-09-2025 |
| | | | | WO | 2024172551 | A1 | 22-08-2024 |
| CN 115763995 | A | | 07-03-2023 | NONE | | | |
| WO 2023217521 | A1 | | 16-11-2023 | CA | 3256806 | A1 | 15-04-2025 |
| | | | | CN | 119301784 | A | 10-01-2025 |
| | | | | DE | 102022111903 | A1 | 16-11-2023 |
| | | | | EP | 4523277 | A1 | 19-03-2025 |
| | | | | JP | 2025516592 | A | 30-05-2025 |
| | | | | KR | 20250008906 | A | 16-01-2025 |
| | | | | US | 2025309320 | A1 | 02-10-2025 |
| | | | | WO | 2023217521 | A1 | 16-11-2023 |
| US 2023352719 | A1 | | 02-11-2023 | JP | 7549475 | B2 | 11-09-2024 |
| | | | | JP | 2022018028 | A | 26-01-2022 |
| | | | | US | 2023352719 | A1 | 02-11-2023 |
| | | | | WO | 2022014583 | A1 | 20-01-2022 |

EPO FORM P0459

For more details about this annex : see Official Journal of the European Patent Office, No. 12/82